## Europäisches Patentamt
## European Patent Office
## Office européen des brevets

(19)

(11) Publication number: **0 003 401**

**B1**

(12) **EUROPEAN PATENT SPECIFICATION**

(45) Date of publication of patent specification: **19.08.81**

(51) Int. Cl.³: **B 23 D 27/00**

(21) Application number: **79300064.7**

(22) Date of filing: **15.01.79**

(54) Cutter assembly and cutting machine including such a cutter assembly.

(30) Priority: **17.01.78 GB 188378**

(43) Date of publication of application:
**08.08.79 Bulletin 79/16**

(45) Publication of the grant of the European patent:
**19.08.81 Bulletin 81/33**

(84) Designated Contracting States:
**BE CH DE FR GB IT NL SE**

(56) References cited:
**CH - A - 268 237**
**DE - A - 1 552 596**
**DE - C - 696 890**
**FR - A - 2 067 344**
**GB - A - 1 137 501**
**US - A - 3 041 905**
**US - A - 3 143 911**

(73) Proprietor: **EUROPEAN ATOMIC ENERGY COMMUNITY (EURATOM)**
**Batiment Jean Monnet Plateau du Kirchberg Boîte Postale 1907**
**Luxembourg (LU)**

(72) Inventor: **Rebut, Paul Henry**
**19 Hids Copse Road Cumnor Hill**
**Oxford Oxfordshire (GB)**
Inventor: **Raimondi, Tullio**
**33 Tennyson Drive**
**Abingdon Oxfordshire (GB)**
Inventor: **Arthur, Thomas Halkett**
**137 Oxford Road**
**Abingdon Oxfordshire (GB)**
Inventor: **Beard, James Henry**
**17 Epping Drive**
**Melton Mowbray Leicestershire (GB)**

(74) Representative: **Baverstock, Michael George Douglas et al,**
**BOULT, WADE & TENNANT 27 Furnival Street**
**London, EC4A 1PQ (GB)**

Courier Press, Leamington Spa, England.

# Cutter assembly and cutting machine including such a cutter assembly

This invention relates to a cutter assembly and to a cutting machine including such a cutter assembly.

There is an increasing requirement for pipes or ducts of various shaped to be joined together for very demanding applications, such as high vacuum or sodium containment in a radioactive environment. It is often required that the joints between such pipes or ducts be separated and subsequently rejoined, for example to enable access to be gained to the interior of the pipes or ducts. In general, such joining and separating operations must be repeated a number of times, and it has been proposed to use an automatically guided motorized carriage for this purpose. This solution is preferred even if personnel can normally gain access to the interior of the pipes or ducts, since it gives reliable results and avoids human error.

Formation of the joints between the pipes or ducts is normally achieved by welding. The welding has to meet high vacuum standards and must compensate for misalignment and gaps caused by the tolerances of the mating lips of the joint. Also, the joints are often curved in a vertical plane, so the welding must also counter the effects on the weld pool caused by the varying welding attitudes required.

Separation of such welded joints is most conveniently performed by cutting. However, the cutting operation must be performed without introducing deformations or metallurgical alterations which might impair subsequent re-welding of the joint. In addition, the pieces of the joint which are cut away and any other debris must be removed so as not to contaminate the interior of the pipes or ducts.

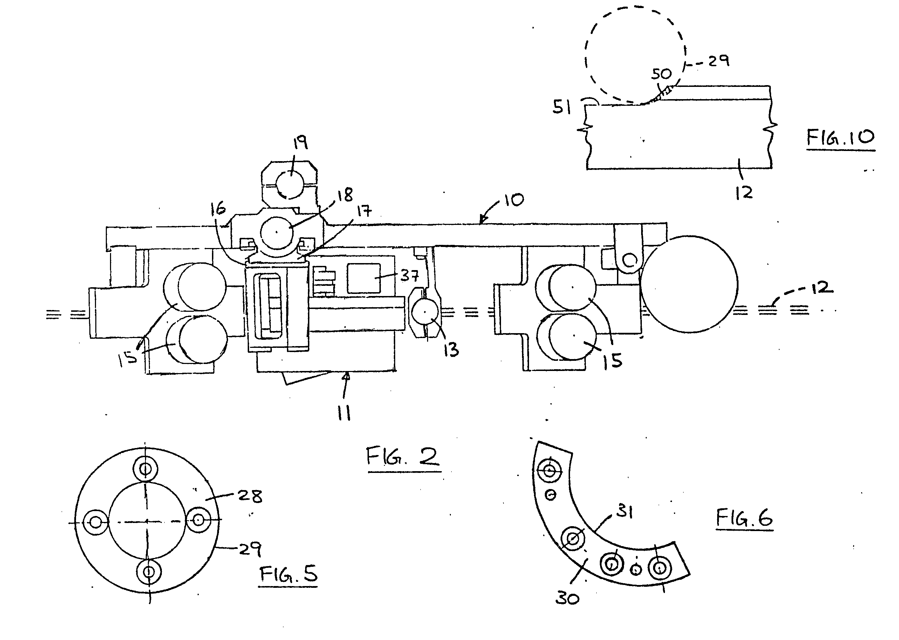

United States Patent No. 3,041,905 discloses a cutter assembly comprising a housing in the form of a frame 10, a member 18 slidable within the housing, a first cutter member 14 secured to the housing and disposed substantially internally thereof, a second cutting member 19 mounted on the slidable member 18 for movement therewith, the second cutting member 19 being movable towards and away from the first cutting member 14 and co-operating therewith to perform a cutting action in use and an opening in the housing through which a workpiece (21 in Figure 2) can be inserted in use to be cut by the cutter members. Swiss Patent No. 268,237 also discloses a cutter assembly for nibbling where a movable cutting member 9 is disposed internally of a housing 10. In addition U.S. Patent No. 3,041,905 also discloses a cavity 13' in the housing which is disposed so as to receive pieces of the workpiece which are removed by the cutter members 14, 19 and means for removing pieces from the cavity, the means including fluid directed means which opens into the cavity and is arranged to guide the pieces into an outlet 27 from this cavity. U.S. Patent No. 3,041,905 further teaches that the cavity 13' is connectable to a vacuum source 30. In addition it appears in particular from Figure 2, that at the moment of shearing, the cavity is substantially sealed. There is no disclosure in either patent, however, of any means for improving the transport of the removed pieces of the workpiece from the cavity after the cutting operation.

It is an object of the present invention to provide a cutter assembly of these known types wherein the transport of the removed pieces of the workpiece from the cavity after the cutting operation is improved.

It is a further object of the present invention to provide a cutting machine including such an improved cutter assembly.

According to one aspect of the present invention, there is provided a cutter assembly comprising a housing, a member slidable within the housing, a first cutter member secured to the housing and disposed substantially internally thereof, a second cutter member mounted on the slidable member for movement therewith and disposed internally of the housing, the second cutter member being movable towards and away from the first cutter member and co-operating therewith to perform a nibbling action in use, and an opening in the housing through which a workpiece can be inserted in use to be cut by the cutter members, wherein the housing has a cavity therein which is disposed so as to receive pieces of said workpiece which are removed by the cutter members in use, and means is provided for removing said pieces from the cavity, which removing means includes fluid directing means which opens into the cavity and which is arranged to guide the removed pieces of said workpiece into an outlet from the cavity, and wherein the cavity is connectable to a vacuum source, the second cutter member when juxtaposed to the first cutter member substantially forming a seal to the cavity, characterised in that the fluid directing means comprises at least one port which communicates with the exterior of the housing, whereby external atmosphere enters the cavity continuously through the or each port due to the vacuum applied to the cavity in use.

Preferably, the second cutter member can be indexed so as to present a different part of a cutting edge thereof to the first cutter member in successive cutting strokes.

Desirably, the second cutter member has a plurality of recesses associated therewith, the recesses being arranged generally on a circle centred on an axis about which the second cutter member is indexible, and the second cutter member is indexed in use by directing a jet of fluid into each recess in turn.

It is also preferred that the housing defines a chamber therein for the reception of pressurized fluid, and that the slidable member is in the form of a piston which is acted on in use by said pressurized fluid. In this case, the piston can be rotatable relative to the housing about the indexing axis of the second cutter member, the second cutter member being rotatable with the piston, and said recesses can be provided in a face of the piston, preferably the face which is acted on by the pressurized fluid in use so that the piston and second cutter member are indexed by pressurized fluid entering the chamber in use.

The housing can be made in two parts which are connected together, said opening being formed between mutually facing portions of the two housing parts.

Desirably, the slidable member is slidably mounted on a shaft disposed within the housing, and the second cutter member is annular and is disposed co-axially with respect to the axis of the shaft.

Advantageously, limit switches are provided which are actuable when the slidable element reaches either of two extreme positions. The limit switches are conveniently actuable by an element which is resiliently biassed into operative engagement with the slidable member and which serves to urge the slidable element into one of said two extreme positions.

According to another aspect of the present invention, there is provided a cutting machine for successively removing pieces from a workpiece, comprising a transporter, a moving mechanism operable to move the transporter along the workpiece in use, a cutter assembly as defined in any one of the last seven preceding paragraphs mounted on the transporter, and a control responsive to the composition of each cutting operation to energise the moving mechanism to move the transporter a predetermined distance along the workpiece.

In this way, the cutting machine can be operated remotely without the need for manual intervention.

Preferably, the control is arranged to render the moving mechanism inoperative if the cutting operation is not successfully completed.

Conveniently, a detector is mounted on the transporter and is arranged to detect the position of the workpiece relative thereto, and means is provided for adjusting the position of the cutter assembly relative to the transporter in accordance with signals received from the detector.

An embodiment of the present invention will now be described, by way of example, with reference to the accompanying drawings, in which:—

Figure 1 is a schematic front view of a cutting machine according to the present invention;

Figure 2 is a schematic plan view of the cutting machine shown in Figure 1;

Figure 3 is a transverse sectional view of the cutting machine shown in Figures 1 and 2;

Figure 4 is an axial sectional view of a cutter assembly according to the present invention, which forms part of the cutting machine of Figures 1 to 3;

Figure 5 is a front view of a movable cutter member of the cutter assembly shown in Figure 4;

Figure 6 is a front view of a stationary cutter member of the cutter assembly shown in Figure 4;

Figure 7 is a section along the line A—A in Figure 4 with parts of the cutter assembly removed for clarity;

Figure 8 is a front view of a piston which forms part of the cutter assembly of Figure 4;

Figure 9 is a section taken along the line B—B in Figure 6; and

Figure 10 is a diagram illustrating the manner in which the cutting machine cuts successive portions from a workpiece.

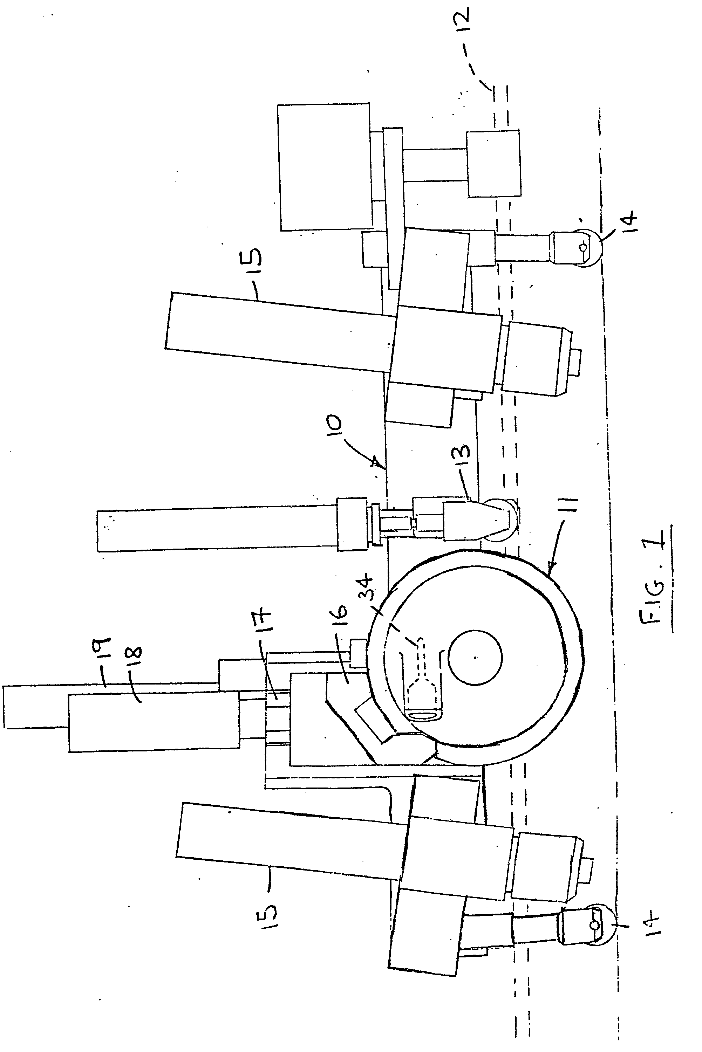

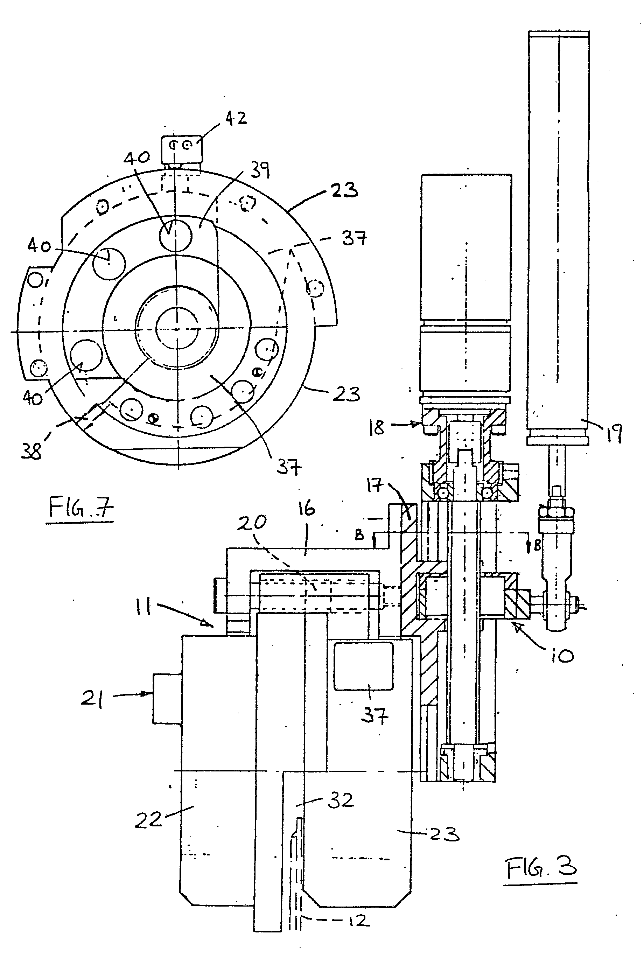

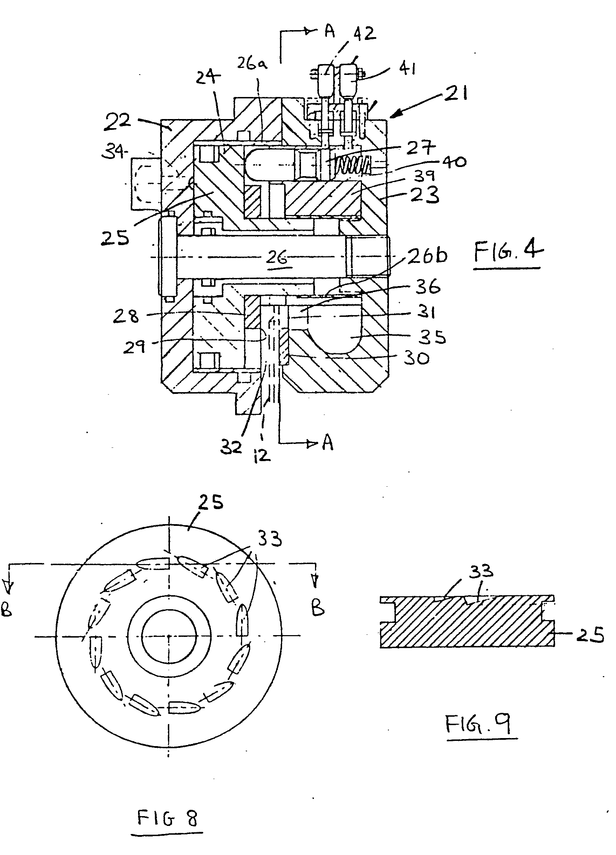

Referring first to Figures 1, 2 and 3, the cutting machine shown therein comprises a transporter 10 on which a cutter assembly 11 is mounted. The cutting machine is designed to travel is designed to travel along a workpiece 12 and to perform a cutting operation on the edge of the workpiece. In this particular example, the workpiece is in the form of two metal sheets in face-to-face contact and lip welded together, and the cutting machine is designed to remove the lip weld so that the sheets can be separated. The machine can be used on such workpieces in which the weld line is either rectilinear or curved. To this end, a detector 13 is carried by the transporter 10 and detects the position of the welded joint relative thereto. The transporter is carried by rollers 14 and can be advanced along the workpiece, which remains stationary, by means of four drive assemblies 15.

The cutter assembly 11 is carried by a platform 16 which is in turn mounted on the transporter 10 by means of a slide 17. The slide 17 enables the platform 16 and cutter assembly 11 to be moved vertically relative to the transporter 10, and a drive assembly 18 is provided for adjusting the vertical position of the cutter assembly 11 in accordance with signals received from the detector 13, in order to maintain the cutter assembly 11 in the correct vertical position relative to the welded joint. A transducer 19 is operatively coupled to the platform 16 so that the vertical position of the cutter assembly 11 can be monitored.

The cutter assembly 11 is mounted on the platform 16 by means of two spaced, horizontal shafts 20 (see Figure 3, in which only one is visible) in such a manner that a certain degree of lateral movement of the cutter assembly 11 relative to the platform 16 is permitted. This allows the cutter assembly 11 to adjust its horizontal position so that it can remain aligned with the direction of extent of the welded joint. Such adjustment is automatic and results from the fact that the workpiece bears against part of the cutter assembly 11 during each cutting operation, as will be described in detail later on.

Referring now more particularly to Figure 4, the cutter assembly 11 comprises a housing 21 made in two parts 22 and 23. Housing part 22 defines a chamber 24 therein which receives pressurized hydraulic fluid in use. A stepped piston 25 is disposed within the chamber 24 and is slidable axially of the housing 21 along a shaft 26. The pressurized hydraulic fluid in chamber 24 acts on one face of the piston 25, the other face thereof being operatively engaged by three spring-loaded plungers 27 (only one shown).

The shaft 26 also acts to secure the housing parts 22 and 23 together, housing part 22 being engaged by a headed portion of the shaft 26 and housing part 23 being engaged by a screw-threaded portion thereof. Housing parts 22 and 23 are additionally secured together at their adjoining peripheries by six clamping bolts (not shown). A sleeve 26a is interposed between the wider end of the piston 25 and the interior surface of the housing part 22, and is fixed relative to the latter. A further sleeve 26b is secured to a spigot on housing part 23 and slidingly receives the narrower end of the piston 25.

Mounted on the piston 25 so as to be movable therewith axially of the housing 21 is an annular cutter member 28 having a circular outer cutting edge 29. The cutter member 28 is movable towards and away from a further cutter member 30 which is secured to the housing part 23. In fact cutter member 30 is recessed into a portion of housing part 23 which is presented to housing part 22. The cutter member 30 is part-annular in form and has an arcuate inner cutting edge 31 which cooperates with the cutting edge 29 on cutter member 28 to perform a cutting action when the piston 25 is reciprocated. The cutter members 28 and 30 are shown in detail in Figures 5 and 6, respectively. The housing 21 has an opening 32 therein through which the workpiece 12 is inserted, the opening 32 being defined by a slot between mutually facing portions of the housing parts 22 and 23. As can be seen from Figure 4, the workpiece 12 can bear against the cutter member 30, which acts as an anvil during the cutting operation.

In order to distribute wear of the cutter member 28 as evenly as possible along its periphery, the cutter member 28 is designed to be indexed around the shaft 26 between successive cutting strokes. To this end, the piston 25 is provided with twelve recesses 33 in its said one face, the recesses 33 being arranged generally on a circle centred on the axis of the piston and being equi-angularly disposed around that axis. The recesses 33 are shown to advantage in Figures 8 and 9. Each recess 33 can be aligned in turn with a passage 34 (see also Figure 1) formed in an end wall of the housing part 22, through which hydraulic fluid is supplied to the chamber 24. The incoming hydraulic fluid at the beginning of each cutting stroke impinges on the particular recess 33 which is aligned with passage 34 at the time, causing the piston 25 to be indexed about the shaft 26. The cutter member 28 is rotatable with the piston 25, and therefore is indexed also. In this way, different parts of the cutting edge 29 of cutter member 28 are presented to the cutter member 30 in successive cutting strokes.

A cavity 35 is defined within the housing part 23, and communicates with the opening 32 by means of an arcuate space 36 between the cutter member 30 and the piston 25. This space 36 is substantially closed by the cutter member 28 when the latter is juxtaposed to the cutter member 30. The cavity 35 is connected to a vacuum source (not shown) through the intermediary of an outlet 37 (see Figure 7), and three ports 38 (only one visible) open into the cavity 35 from the exterior of the housing 21. When the space 36 is substantially closed by cutter member 28, a vacuum is applied to the cavity 35 so as to suck therefrom pieces removed from the workpiece. At the same time external atmospheric air rushes in through the ports 38 and creates air jets which guide the removed pieces towards and through the outlet 37.

Part of the cavity 37 is occupied by an arcuate block 39 which has three bores 40 therein, each bore housing a respective one of the spring-loaded plungers 27. One of the plungers 27 (see Figure 4) has a configured outer surface, with which an actuator member of each of a pair of micro-switches 41 and 42 can engage. Micro-switch 41 is arranged to be actuated when the piston 25 moves into and out of an extreme righward position , as viewed in Figure 4, i.e. upon the successful completion of a cutting stroke, and micro-switch 42 is arranged to be actuated when the piston 25 moves into and out of an extreme leftward position, i.e. upon return of the cutter member 28.

The cutting machine operates as follows. Upon the completion of a cutting operation, the transporter 10 is advanced a predetermined distance along the workpiece 12. A solenoid-operated valve (not shown) is then opened to supply pressurized hydraulic fluid to the chamber 24 *via* the passage 34, thereby moving the piston 25 to the right, as viewed in Figure 4. The cutter members 28 and 30 then perform a cutting operation on the workpiece 12 in the following manner.

The movable cutter member 28 bears against the workpiece 12 and urges the workpiece and the stationary cutter 30 into mutual engagement. The cutting edges 29 and 31 then co-operate to slice through the workpiece and cut away a portion of its edge. The force of the cutting action and the movement of the cutter member 28 cause the removed portion of the workpiece to be ejected into the cavity 35. A vacuum is then applied to the cavity 35 to extract the removed workpiece portion therefrom in the manner described previously.

Referring now to Figure 10, the portion of the workpiece 12 thus cut away (referenced 50 and indicated by hatching) is curved in shape and has two arcuate edges defined by successive cuts of the cutting edges 29 and 31. By making the distance travelled by the cutting machine between successive cuts comparatively small, the resultant cut edge 51 of the workpiece 12 can be made substantially smooth.

When the piston 25 reaches its extreme rightward position at the end of the cutting stroke, micro-switch 41 is actuated and a predetermined delay in the cycle of operations ensues to allow sufficient time for the removed piece of the workpiece and any other debris to be sucked away through the outlet 37. The above-mentioned solenoid-operated valve is then closed, and a further solenoid-operated, valve (not shown) is opened allowing the hydraulic fluid to drain from the chamber 24 and the piston 25 to move to the left (as viewed in Figure 4) under the action of the spring-loaded plungers 27. When the piston 25 reaches its extreme leftward position, micro-switch 42 is actuated thereby closing the further solenoid-operated valve and initiating the next incremental advance of the transporter 10.

In the event that the cutter members 28 and 30 fail to cut through the workpiece 12, or for any other reason the cutting operation is not successfully completed, a control mechanism prevents the transporter 10 from being further advanced along the workpiece 12 and displays a warning to an operator of the machine.

The cutting machine can be operated remotely if desired, which makes it particularly suitable for use in an enclosed envoronment.

Where the cutting machine is to be used in an environment which must remain free from contamination, de-oxygenated and de-ionised water can be used as the hydraulic fluid. In this case, the cutting machine is provided with a piston and cylinder assembly (not illustrated) by means of which a conventional hydraulic fluid, e.g. oil, pressurizes the de-oxygenated and deionized water. The piston and cylinder assembly comprises a closed cylinder within which a piston is slidable, the oil being supplied to the cylinder on one side of the piston and the water being supplied to the cylinder on the other. The stroke of the piston is adjustable, so that the volume of water which is delivered to the chamber 24 during each piston stroke can be varied. This volume is in fact adjusted so as to be enough to allow a cutting stroke to be completed, but not enough to allow the cutter assembly piston 25 to exert a large thrust on the housing 21 at the end of its stroke.

As mentioned above, the distance by which the cutting machine is advanced can be adjusted so that the edge produced by the cutting operation is smooth. Also, there are no undulations in the workpiece transversely of its direction of extent due to the cutting action. Furthermore, by suitable adjustment of the vertical position of the cutter assembly relative to the workpiece, a minimum wastage of material can be obtained. Thus, where as in the embodiment described above the workpiece is· in the form of two metal sheets lip welded in face-to-face relation, the cutter assembly can be · so positioned that the sheets are cut just below the weld line.

**Claims**

1. A cutter assembly (11) comprising a housing (21), a member (25) slidable within the housing, a first cutter member (30) secured to the housing and disposed substantially internally thereof, a second cutter member (28) mounted on the slidable member for movement therewith and disposed internally of the housing, the second cutter member being movable towards and away from the first cutter member and co-operating therewith to perform a nibbling action in use, and an opening (32) in the housing through which a workpiece can be inserted in use to be cut by the cutter members, wherein the housing has a cavity (35) therein which is disposed so as to receive pieces of the workpiece which are removed by the cutter members in use, and means is provided for removing the pieces from the cavity which removing means includes fluid directing means which opens into the cavity and which is arranged to guide the removed pieces of the workpiece into an outlet (37) from the cavity, and wherein the cavity is connectable to a vacuum source, the second cutter member when juxtaposed to the first cutter member substantially forming a seal to the cavity, characterised in that the fluid directing means comprises at least one port (38) which communicates with the exterior of the housing, whereby external atmosphere enters the cavity continuously through the or each port due to the vacuum applied to the cavity in use.

2. A cutter assembly as claimed in claim 1 wherein the second cutter member can be indexed so as to present a different part of a cutting edge thereof to the first cutter member in successive cutting strokes.

3. A cutter assembly as claimed in claim 2 wherein the second cutter member has a plurality of recesses (33) associated therewith, the recesses being arranged generally on a circle centred on an axis about which the second cutter member is indexible, and the second cutter member is indexed in use by directing a jet of fluid into each recess in turn.

4. A cutter assembly as claimed in claim 3 wherein the housing defines a chamber (24) therein for the reception of pressurized fluid, and wherein the slidable member is in the form of a piston which is acted on in use by said pressurized fluid.

5. A cutter assembly as claimed in claim 4 wherein the piston is rotatable relative to the housing about the indexing axis of the second cutter member, the second cutter member being rotatable with the piston, and the recesses are provided in a face of the piston. 6. A cutter assembly as claimed in claim 5 wherein the said face is acted on by the pressurized fluid in use so that the piston and second cutter member are indexed by pressurized fluid entering the chamber in use.

7. A cutter assembly as claimed in any one of the preceding claims wherein the housing is made in two parts (22, 23) which are connected together, the said opening being formed between mutually facing portions of the two housing parts.

8. A cutter assembly as claimed in any one of the preceding claims wherein the slidable member is slidably mounted on a shaft (26) disposed within the housing, and the second cutter member is annular and is disposed co-axially with respect to the axis of the shaft.

9. A cutter assembly as claimed in any one of the preceding claims wherein limit switches (41, 42) are provided which are actuable when the slidable element reaches either of two extreme positions.

10. A cutter assembly as claimed in claim 9 wherein the limit switches are actuable by an element (27) which is resiliently biassed into operative engagement with the slidable member and which serves to urge the slidable element into one of the two extreme positions.

11. A cutting machine for successively removing pieces from a workpiece (12), comprising a transporter (10), a moving mechanism (15) operable to move the transporter along the workpiece in use, a cutter assembly as claimed in any one of the preceding claims mounted on the transporter, and a control responsive to the completion of each cutting operation to energise the moving mechanism to move the transporter a predetermined distance along the workpiece.

12. A cutting machine as claimed in claim 11 when arranged to operate remotely without the need for manual intervention.

13. A cutting machine as claimed in claim 11 or claim 12 wherein the control is arranged to render the moving mechanism inoperative if the cutting operation is not successfully completed.

14. A cutting machine as claimed in any one of claims 11 to 13 wherein a detector (13) is mounted on the transporter and is arranged to detect the position of the workpiece relative thereto, and means (18) is provided for adjusting the position of the cutter assembly relative to the transporter in accordance with signals received from the detector.

**Patentansprüche**

1. Schneideinrichtung (11) mit einem Gehäuse (21), mit einem innerhalb des Gehäuses verschiebbaren Bauteil (25), mit einem am Gehäuse befestigten und im wesentlichen innerhalb desselben liegenden ersten Schneidelement (30), mit einem auf dem verschiebbaren Bauteil zur Bewegung mit diesem angeordneten und innerhalb des Gehäuses liegenden zweiten Schneidelement (28), wobei das zweite Schneidelement zu dem ersten Schneidelement hin und von diesem weg bewegbar ist und mit ihm zusammenwirkt, um beim Gebrauch einen Nibbelvorgang auszuführen, sowie mit einer Öffnung (32) in dem Gehäuse, durch die ein Werkstück beim Gebrauch eingeführt werden kann, um von den Schneidelementen geschnitten zu werden, wobei das Gehäuse einen Hohlraum (35) aufweist, der so angeordnet ist, daß er Teile des Werkstücks aufnehem kann, die durch die Schneidelemente beim Gebrauch entfernt werden, und wobei eine Einrichtung zum Entfernen von Teilen aus dem Hohlraum vorgesehen ist, die eine Einrichtung zum Richten einer Flüssigkeit umfaßt, welche in den Hohlraum mündet und so angeordnet ist, um die vom Werkstück entfernten Teile in einen Auslaß (37) aus dem Hohlraum hinauszuführen, wobei der Hohlraum an eine Vakuumquelle angeschlossen werden kann, während das zweite Schniedelement, wenn es neben dem ersten Schneidelement gelegen ist, im wesentlichen einen dichten Verschluß des Hohlraums bildet, dadurch gekennzeichnet, daß die Einrichtung zum Richten einer Flüssigkeit mindestens eine Durchgangsöffnung (38) aufweist, die mit der Außenseite des Gehäuses in Verbindung steht, wobei Außenatmosphäre aufgrund des an den Hohlraum beim Gebrauch angelegten Vakuums kontinuierlich durch die oder durch jede Öffnung in den Hohlraum eintritt.

2. Schneideinrichtung nach Anspruch 1, dadurch gekennzeichnet, daß das zweite Schneidelement so eingestellt werden kann, daß es bei aufeinanderfolgenden Schneidhüben dem ersten Schneidelement ein unterschiedliches Teil seiner Schneidkante darbietet.

3. Schneideinrichtung nach Anspruch 2, dadurch gekennzeichnet, daß das zweite Schneidelement eine Vielzahl von ihm zugehörigen Einkerbuingen (33) aufweist, wobei die Einkerbungen allgemein auf einem Kreis angeordnet sind, der auf einer Achse zentriert ist, um die das zweite Schneidelement einstellbar ist, und daß das zweite Schneidelement beim Gebrauch eingestellt wird, indem ein Flüssigkeitsstrahl der Reihe nach in jede Einkerbung gerichtet wird.

4. Schneideinrichtung nach Anspruch 3, dadurch gekennzeichnet, daß das Gehäuse in sich eine Kammer (24) zur Aufnahme von unter Druck stehender Flüssigkeit begrenzt, und daß das verschiebbare Bauteil die Form eines Kolbens aufweist, auf den bei Gebrauch mittels der unter Druck stehenden Flüssigkeit eingewirkt wird.

5. Schneideinrichtung nach Anspruch 4, dadurch gekennzeichnet, daß der Kolben relativ zum Gehäuse um die Einstellachse des zweiten Schneidelements drehbar ist, wobei das zweite Schneidelement mit dem Kolben drehbar ist, und daß die Einkerbungen in einer Stirnfläche des Kolbens vorgesehen sind.

6. Schneideinrichtung nach Anspruch 5, dadurch gekennzeichnet, daß auf diese Stirnfläche mittels der unter Druck stehenden Flüssigkeit beim Gebrauch eingewirkt wird, so daß der Kolben und das zweite Schneidelement durch die unter Druck stehende beim Gebrauch in die Kammer eindringende Flüssigkeit eingestellt werden.

7. Schneideinrichtung nach einem der Ansprüche 1 bis 6, dadurch gekennzeichnet, daß das Gehäuse aus zwei Teilen (22, 23) besteht, die miteinander verbunden sind, wobei die Öffnung zwischen einander gegenüberliegenden Abschnitten der beiden Gehäuseteile gebildet ist.

8. Schneideinrichtung nach einem Ansprüche 1 bis 7, dadurch gekennzeichnet, daß das verschiebbare Bauteil verschiebbar auf einer innerhalb des Gehäuses angeordneten Welle (26) angebracht ist, und daß das zweite Schneidelement ringförmig ist und koaxial zur Achse der Welle angeordnet ist.

9. Schneideinrichtung nach einem der Ansprüche 1 bis 8, dadurch gekennzeichnet, daß Grenzschalter (41, 42) vorgesehen sind, die betätigbar sind, wenn das verschiebbare Bauteil eine seiner beiden Extremstellungen erreicht.

10. Schneideinrichtung nach Anspruch 9, dadurch gekennzeichnet, daß die Grenzschalter mittels eines Elements (27) betätigbar sind, das federnd in Arbeitseingriff mit dem verschiebbaren Bauteil vorgespannt ist und das dazu dient, das verschiebbare Bauteil in eine der beiden Extremstellungen zu zwingen.

11. Schneidmaschine zum aufeinanderfolgenden Entfernen von Teilen von einem Werkstück (12), gekennzeichnet durch einen Förderer (10), einen Bewegungsmechanismus (15), der betätigbar ist, um den Förderer beim Gebrauch am Werkstück entlangzuführen, ein auf dem Förderer angeordnete Schneidvorrichtung entsprechend einem der Ansprüche 1 bis 10, und eine Steuerung, die auf die Beendigung eines jeden Schneidvorganges anspricht, um den Bewegungsmechanismus zu betätigen, so daß den Förderer um eine vorherbestimmte Entfernung an dem Werkstück entlang bewegt.

12. Schneidmachine nach Anspruch 11, dadurch gekennzeichnet, daß sie ohne das Erfordernis manuellen Eingreifens ferngesteuert werden kann.

13. Schneidmaschine nach Anspruch 11 oder 12, dadurch gekennzeichnet, daß die Steuerung so angeordnet ist, daß sie den Bewegungsmechanismus außer Betrieb setzt, falls der Schneidvorgang nicht erfolgreich vollendet wird.

14. Schneidmaschine nach einem der Ansprüche 11 bis 13, dadurch gekennzeichnet, daß ein Detektor (13) auf dem Förderer angeordnet und so angebracht ist, daß er die Stellung des Werkstücks relativ zu ihm feststellt, und daß eine Einrichtung (18) zum Feststellen der Position der Schneideinrichtung relativ zum Förderer entsprechend von dem Detektor erhaltenen Signalen vorgesehen ist.

## Revendications

1. Ensemble de coupe (11) comprenant un boîtier (21), un organe (25) destiné à coulisser dans le boîtier, un premier organe (30) de coupe fixé au boîtier et disposé pratiquement à l'intérieur de celui-ci, un second organe (28) de coupe monté sur l'organe destiné à coulisser afin qu'il se déplace avec lui et disposé à l'intérieur du boîtier, le second organe de coupe pouvant se rapprocher et s'éloigner du premier organe de coupe et coopérant avec celui-ci à l'exécution d'un grugeage lors du fonctionnement, et un orifice (32) formé dans le boîtier et permettant l'introduction d'une pièce à couper par les organes de coupe, lors du fonctionnement, le boîtier ayant une cavité (35) disposée de manière qu'elle reçoive des morceaux de la pièce qui sont retirés par les organes de coupe lors du fonctionnement, et un dispositif étant destiné à retirer les morceaux de cette cavité, ce dispositif comprenant un dispositif destiné à diriger un fluide, débouchant dans la cavité et disposé de manière qu'il guide les morceaux retirés de la pièce vers une sortie (37) hors de la cavité, celle-ci étant destinée à être reliée à une source de vide, le second organe de coupe, lorsqu'il est juxtaposé au premier organe de coupe, formant pratiquement un joint étanche avec la cavité, caractérisé en ce que le dispositif destiné à diriger un fluide comporte au moins un canal (38) qui communique avec l'extérieur du boîtier, si bien que l'atmosphère externe pénètre constamment dans la cavité par le canal ou par chaque canal, sous l'action du vide régnant dans la cavité lors de l'utilisation.

2. Ensemble de coupe selon la revendication 1, caractérisé en ce que le second organe de coupe peut être déplacé afin qu'il présente une partie différente d'un bord de coupe lui appartenant au premier organe de coupe dans les courses successives de coupe.

3. Ensemble de coupe selon la revendication 2, caractérise en ce que le second organe de coupe a plusieurs cavités (33) qui lui sont associées, les cavités étant disposées de façon générale sur un cercle centré sur un axe autour duquel le second organe de coupe peut se déplacer, et le second organe de coupe est déplacé lors de l'utilisation par direction d'un jet de fluide dans chaque cavité tour à tour.

4. Ensemble de coupe selon la revendication

3, caractérisé en ce que le boîtier délimite une chambre (24) à l'intérieur, pour la réception de fluide sous pression, et l'organe destiné à coulisser est sous forme d'un piston sur lequel le fluide sous pression agit lors du fonctionnement.

5. Ensemble de coupe selon la revendication 4, caractérisé en ce que le piston peut tourner par rapport au boîtier autour de l'axe de déplacement du second organe de coupe, ce dernier pouvant tourner avec le piston, et les cavités sont formées dans une face du piston.

6. Ensemble de coupe selon la revendication 4, caractérisé en ce que, lors de l'utilisation, le fluide sous pression agit sur ladite face de manière que le piston et le second organe de coupe soient déplacés par le fluide sous pression qui pénètre dans la chambre.

7. Ensemble de coupe selon l'une quelconque des revendications précédentes, caractérisé en ce que le boîtier est formé en deux parties (22, 23) qui sont racordées l'une à l'autre, ledit orifice étant formé entre les zones en regard des deux parties du boîtier.

8. Ensemble de coupe selon l'une quelconque des revendications précédentes, caractérisé en ce que l'organe destiné à coulisser peut coulisser sur un arbre (26) disposé dans le boîtier, et le second organe de coupe est annulaire et est placé coaxialement à l'axe de l'arbre.

9. Ensemble de coupe selon l'une quelconque des revendications précédentes, caractérisé en ce que des commutateurs (41, 42) de limite sont destinés à être commandés lorsque l'élément destiné à coulisser atteint l'une ou l'autre de deux positions d'extrémité.

10. Ensemble de coupe selon la revendication 9, caractérisé en ce que les commutateurs de limite sont destinés à être commandés par un élément (27) qui est repoussé élastiquement en coopération avec l'organe destiné à coulisser et qui est destiné à repousser cet élément destiné à coulisser vers l'une des deux positions d'extrémité.

11. Machine de coupe destinée à enlever successivement des morceaux d'une pièce (12), caractérisé en ce qu'elle comprend un transporteur (10), un mécanisme (15) destiné à déplacer le transporteur le long de la pièce en cours d'utilisation, un ensemble de coupe selon l'une quelconque des revendications précédentes, monté sur le transporteur, et une commande destinée, à la fin de chaque opération de coupe, à alimenter le mécanisme de déplacement afin que le transporteur se déplacement afin que le transporteur se déplace d'une distance prédéterminée le long de la pièce.

12. Machine de coupe selon la revendication 11, caractérisé en ce qu'elle est disposée de manière qu'elle fonctionne à distance sans intervention manuelle nécessaire.

13. Machine de coupe selon l'une des revendications 11 et 12, caractérisé en ce que la commande est destinée à rendre inopérant le mécanisme de déplacement lorsque l'opération de coupe n'est pas terminée de façon satisfaisante.

14. Machine de coupe selon l'une quelconque des revendications 11 à 13, caractérisé en ce qu'un détecteur (13) est monté sur le transporteur et est disposé de manière qu'il détecte la position de la pièce par rapport à lui, et un dispositif (18) est destiné à régler la position de l'ensemble de coupe par rapport au transporteur en fonction de signaux qu'il reçoit du détecteur.

FIG. 1

FIG.7

FIG.3

FIG. 4

FIG 8

FIG. 9

FIG.10

FIG. 2

FIG.5

FIG.6

0 003 401